# EUROPÄISCHE PATENTSCHRIFT

(11) **EP 2 126 790 B1**
(45) Veröffentlichungstag und Bekanntmachung des Hinweises auf die Patenterteilung: **28.11.2012**
(21) Anmeldenummer: 08700876.9
(22) Anmeldetag: 19.01.2008
(51) Int. Cl.: G06K 9/62

(54) **VERFAHREN UND DATENVERARBEITUNGSSYSTEM ZUR AUTOMATISCHEN ERKENNUNG, VERARBEITUNG, INTERPRETATION UND SCHLUSSFOLGERUNG VON ALS DIGITALE DATEN VORLIEGENDEN OBJEKTEN, INSBESONDERE AUCH VON UNBEKANNTEN OBJEKTEN**
METHOD AND DATA PROCESSING SYSTEM FOR AUTOMATIC IDENTIFICATION, PROCESSING, INTERPRETATION AND EVALUATION OF OBJECTS IN THE FORM OF DIGITAL DATA, ESPECIALLY UNKNOWN OBJECTS
PROCÉDÉ ET SYSTÈME INFORMATIQUE POUR L'IDENTIFICATION, LE TRAITEMENT, L'INTERPRÉTATION ET L'INFÉRENCE AUTOMATIQUES D'OBJETS SE PRÉSENTANT SOUS FORME DE DONNÉES NUMÉRIQUES, NOTAMMENT D'OBJETS INCONNUS

(30) Priorität: 19.01.2007 DE 102007003448
(43) Veröffentlichungstag der Anmeldung: 02.12.2009
(73) Patentinhaber: Perner, Petra, 04275 Leipzig (DE)
(72) Erfinder: Perner, Petra, 04275 Leipzig (DE)
(74) Vertreter: Krause, Wolfgang
(86) Internationale Anmeldenummer: PCT/DE2008/000094
(87) Internationale Veröffentlichungsnummer: WO 2008/086793

(56) Entgegenhaltungen:
- DE-A1-102004 018 174
- US-A1- 2002 136 433
- BROWNING J ET AL: "A mixture model and EM-based algorithm for class discovery, robust classification, and outlier rejection in mixed labeled/unlabeled data sets" IEEE TRANSACTIONS ON PATTERN ANALYSIS AND MACHINEINTELLIGENCE, IEEE SERVICE CENTER, LOS ALAMITOS, CA, US, Bd. 25, Nr. 11, 1. November 2003 (2003-11-01), Seiten 1468-1483, XP011102999 ISSN: 0162-8828
- DELLEPIANE S ET AL: "MODEL GENERATION AND MODEL MATCHING OF REAL IMAGES BY A FUZZY APPROACH" PATTERN RECOGNITION, ELSEVIER, GB, Bd. 25, Nr. 2, 1. Februar 1992 (1992-02-01), Seiten 115-129,131, XP000263519 ISSN: 0031-3203

## Beschreibung

Die Erfindung betrifft Verfahren und Datenverarbeitungssysteme zur automatischen Erkennung und Verarbeitung von als digitale Daten vorliegenden und durch Merkmalswertpaare repräsentierten Objekten in Form von Buchstabenkombinationen, Wörtern, Zeichen und Bildern jeweils einzeln oder in wenigstens einer Kombination oder in einer Folge, Computer-Programm-Produkte mit jeweils einem Programmcode zur Durchführung dieser Verfahren und Computer-Programm-Produkte auf maschinenlesbaren Trägem zur Durchführung dieser Verfahren.

Anordnungen zur automatischen Untersuchung von Zellen, Zellkomplexen und anderen biologischen Proben sind unter anderem durch die DE 196 16 997 A1 (Verfahren zur automatisierten mikroskopunterstützten Untersuchung von Gewebeproben oder Körperflüssigkeitsproben), DE 42 11 904 A1 (Verfahren und Vorrichtung zum Erstellen einer Artenliste für eine flüssige Probe) und DE 196 39 884 A 1 (Mustererkennungssystem) bekannt.
In der DE 196 16 997 A1 werden über die Anwendung von Neuronalen Netzen Gewebeproben oder Körperflüssigkeitsproben auf Zelltypen untersucht.
Kleinstlebewesen wie Würmer, Insekten oder Schnecken werden in der DE 42 11 904 A1 erfasst und identifiziert. Die Identifikation erfolgt über einen Vergleich mit in einem Referenzobjektspeicher enthaltenen Objekten. Gleichzeitig werden die identifizierten Objekte gezählt und in eine Artenliste eingetragen.
In der DE 196 39 884 A1 werden feste Bestandteile in einer Probenströmung nach ihrer Größe insbesondere entsprechend ihrer Projektionslänge im Bild entlang der X- und der Y-Achse, ihres Umfangs und ihrer mittleren Farbdichte erfasst.
Nachteilig ist die fehlende Automatisierbarkeit.
Durch die DE 10 2004 018 174 (Verfahren zur Akquisition von Formen aus Bildern mit Fällen und zum fallbasierten Erkennen von Objekten in digitalen Bildern, Computer-Programm-Produkt und digitales Speichermedium zur Ausführung dieses Verfahrens) sind Verfahren zur Akquisition von Formen aus Bildern mit Fällen und zum fallbasierten Erkennen von Objekten in digitalen Bildern, Computer-Programm-Produkte mit jeweils einem Programmcode zur Durchführung dieses Verfahrens, Computer-Programm-Produkte auf maschinenlesbaren Trägern zur Durchführung dieses Verfahrens und digitale Speichermedien, die so mit einem programmierbaren Computersystem zusammenwirken können, dass diese Verfahren ausgeführt werden, bekannt. Die Verfahren zeichnen sich insbesondere dadurch aus, dass semiautomatisch Einzelformen von Fällen in Bildern erhoben, dass automatisch aus diesen Einzelformen abstrakte Formmodelle in verschiedenen Abstraktionsniveaus gewonnen und dass automatisch Objekte bestimmt werden können. Die gelernten abstrakten Formmodelle sind entweder gemittelte Formen aus Gruppen von Fällen oder Mediane als Einzelformen von Gruppen von Fällen. Unbekannte Objekte können nicht automatisch erkannt und interpretiert werden Schlussfolgerungen aus unbekannte Objekten können automatisch nicht getroffen werden.
In der Druckschrift Miller, D.J. and Browning, J., "A Mixture Model and EM-Based Algorithm for Class Discovery, Robust Classification, and Outlier Rejection in Mixed Labeled / Unlabeled Data Sets", IEEE Trans. on Pattern Analysis and Machine Intelligence, Vol. 25, No. 11, pp. 1468 bis 1483, 2003 wird ein Mixture-Model Ansatz für die Klassifikation in bekannte Klassen und die Erkennung von unbekannten Klassen beschrieben. Darin wird ein EM Methode (Energy minimization) genutzt, um die Modelle zu lernen. Es kommt kein MML oder MDL Ansatz zur Anwendug, um die Modelle zu lernen. Darüber hinaus wird eine Datenorganisation mittels eines ähnlichkeitsbasierten Ansatzes aufgebaut, der das Lernen neuer Modelle steuert oder die neuen Datensätze sofort für die Klassifikation über einen ähnlichkeitsbasierten Ansatz zur Klassifikation zur Verfügung stellt.
Durch die Druckschrift Dellepiane, S. et al., "Model Generation and Model Matching of Real Images by a Fuzzy Approach", Pattern Recognition, Vol. 25, No. 2, pp. 115 bis 129, 1992, ist ein modellbasierten Ansatz bekannt, um Szenen in Bildern zu klassifizieren. Dabei wird ein wissensbasiertes Modell aufgebaut, dass zur Interpretation eines Bildes dient. Dabei werden die Unsicherheiten bei der Interpretation mit Fuzzy Logik modelliert. Die Druckschrift beinhaltet nicht die Klassifikation mittels Mixture Models noch das geordnete Sammeln von unbekannten Daten nach einem Fuzzy Conceptual Clustering Ansatz.

Der in den Patentansprüchen 1 und 7 bis 9 angegebenen Erfindung liegt die Aufgabe zugrunde, in digitalen Daten vorliegende Objekte automatisch zu erkennen, zu bestimmen, zuzuordnen, zu interpretieren und zu schlussfolgern.

Diese Aufgabe wird mit den in den Patentansprüchen 1 und 7 bis 9 aufgeführten Merkmalen gelöst.

Die Verfahren und Datenverarbeitungssysteme zur automatischen Erkennung und Verarbeitung von als digitale Daten vorliegenden und durch Merkrnalswertpaare repräsentierten Objekten in Form von Buchstabenkombinationen, Wörtern, Zeichen und Bildern jeweils einzeln oder in wenigstens einer Kombination oder in einer Folge zeichnen sich insbesondere dadurch aus, dass Objekte, die keinem bekannten Modell zugeordnet werden können, als unbekannte Objekte erkannt in einer Falldatenbank eingetragen werden. Damit stehen diese in der Folge über ein ähnlichkeitsbasiertem Verfahren für die automatische Interpretation und Schlussfolgerung zur Verfügung. Diese unbekannten Objekte können zu neuen Modellen führen. Dadurch ist eine ständige Erweiterung der Modelldatenbank gegeben, wobei bereits bestehende Modelle verfeinert und neue Modelle gelernt werden können.
Dazu wird über ein Entscheidungsmodul aus 1 bis n Modellen einer Modelldatenbank nach dem Bayes'schen Entscheidungskriterium entschieden, ob ein bekanntes oder ein unbekanntes Objekt vorliegt und das Objekt einer bekannten Modellklasse zuzuordnen ist. Bei keinem unbekannten Objekt wird dieses als neues Objekt einer Modellklasse zugeordnet in einem Zwischenspeicher abgelegt. Bei einem unbekannten Objekt wird über ein Modul einer ähnlichkeitsbasierten Schlussfolgerung das unbekannte Objekt mit in einer Falldatenbank gespeicherten Objekten verglichen. Bei einem positiven Vergleich wird das unbekannte Objekt einer Fallklasse mit ähnlichen oder gleichen Objekten zugeordnet. Bei einem negativen Vergleich wird das unbekannte Objekt als nicht einer Modellklasse zugehörig angezeigt und entweder einer Fallklasse oder einer neuen Fallklasse zugeordnet. Die Modelldatenbank kann flach organisiert oder hierarchisch in statische Modelle, die Überklassen und Unterklassen (Spezialisierungen) repräsentieren, organisiert sein.

Weiterhin werden die als Merkmalswertpaare vorliegenden Objekte einer Fallklasse der Falldatenbank in einem mit der Falldatenbank verbundenen MML-Lernmodul (MML-Minimum Message Length - minimale Informationslänge) oder MDL-Lernmodul (MDL-Minimum description Length - minimale Beschreibungslänge) für Modelle so bearbeitet, dass die Objekte der Fallklasse entweder einer Modellklasse in der Modelldatenbank zugeordnet oder als neue Modellklasse einschließlich eines neuen Modells in der Modelldatenbank gespeichert werden, wobei der Eintrag der Klasse in der Falldatenbank gelöscht wird. Gleichzeitig werden die Daten für das neue Modell auch in einem Zwischenspeicher als Modellklasse gespeichert.
Weiterhin werden bei einer bestimmten Anzahl von Objekten einer Modellklasse des Zwischenspeichers über entweder ein MML-Aktualisierungsmodul oder ein MDL-Aktualisierungsmodul die Parameter einer Verteilungsdichtefunktion neu gelernt. Damit wird das Modell der Modellklasse aktualisiert. Damit wird das Modell der Modellklasse aktualisiert. Eine ständige Aktualisierung wird vermieden und Aktualisierungszeiten begrenzt.
Über die Verfahren und Datenverarbeitungssysteme können damit die unterschiedlichsten Objekte automatisch erkannt, bestimmt und zugeordnet werden. Darüber hinaus sind Schlussfolgerungen aus den Objekten möglich, die zu neuen Klassen und daraus resultierend zu neuen Modellklassen mit jeweils einem Modell führen. Damit ist auch eine Schlussfolgerung auf ein Ereignis aus der Ursache möglich.
Ein weiterer Vorteil besteht darin, dass die als digitale Daten vorliegenden Objekte unterschiedlichster Art sein können und durch Merkmalswertpaare repräsentiert sind. Über das Bayes'schen Entscheidungskriterium wird dabei entschieden ob ein bekanntes oder ein unbekanntes Objekt vorliegt, wobei das bekannte Objekt einem Modell und damit einer Modellklasse zugeordnet wird. Ein weiterer Vorteil besteht darin, dass diese Modelle aus den Objekten der Modellklasse aktualisiert und somit angepasst werden. Dem Bayes'schen Entscheidungskriterium kann vorzugsweise die Dirichlet- oder die Normalverteilung zu Grunde liegen.
Unbekannte Objekte werden über das Modul der ähnlichkeitsbasierten Schlussfolgerung Fallklassen oder neuen Fallklassen zugeordnet, die neue Modellklassen und daraus folgernd Modellen begründen.
Die Objekte werden dazu vorteilhafterweise unverändert zugefügt.
Damit eignen sich die Verfahren und Datenverarbeitungssysteme für die unterschiedlichsten Objekte mit den verschiedensten Anwendungen. Das sind unter anderem in der Medizin die Erstellung einer Diagnose aus dem Objekt, in der Informatik eine Zuordnung (zum Beispiel E-Mail ist Spam), im Qualitätsmanagement die Aussagekraft von Testreihen sowie die Erkennung, Bestimmung und auch Weiterverfolgung von visuell erfassten Objekten, jeweils mit den Möglichkeiten der Schlussfolgerungen aus diesen Objekten. Neben der Zuordnung von Objekten in bestehende Modellklassen werden nicht zuordenbare Objekte Fallklassen mit Objekten oder neuen Fallklassen zugeordnet. Die Struktur des Systems bleibt dabei erhalten. Gleichzeitig ist sichergestellt, dass das verwendete Modell bei Hinzufügung von neuen Objekten aktualisiert wird.
Objekte sind Zeichen, Abbildungen von Gegenständen, Merkmalsbeschreibungen von Gegenständen, Eigenschaftsbeschreibungen von Gegenständen, Sequenzen von Gegenständen, Merkmalsbeschreibungen, Eigenschaftsbeschreibungen und Muster von Gegenständen jeweils einzeln oder in wenigstens einer Kombination.
Gegenstände sind dabei beispielsweise Saatgüter und Körnerfrüchte.
Vorteilhafterweise kann dadurch insbesondere auch die Qualität von Saatgütern oder Körnerfrüchten ermittelt werden. Das schließt auch Getreide ein. Mit einer Krankheit befallene oder beschädigte Saatgüter oder Körner aber auch Teile davon können automatisch erfasst werden. Qualitätsmängel wie unter anderem verursacht durch aufgesprungene Körner, Kömerauswuchs, seitlich unvollständiger Spelzenschluss, spelzenverletzte Körner, Zwiewuchs, grüne Körner, intakte rote Körner, nichtintakte rote Körner und Flughafer können ermittelt werden. Natürlich werden auch die intakten Körner der Proben festgestellt. Das schließt auch deren Größe mit ein. Damit kann eine objektive Bestimmung des Anteils von intakten und mangelhaften Saatgütern oder Körnerfrüchten erfolgen.
Ermittelbare pilzgeschädigte Körnerfrüchte stellen Beeinträchtigungen sowohl im Verarbeitungswert als auch in hygienischer Hinsicht dar und zählen damit nicht zum einwandfreien Grundgetreide. Pilzgeschädigte Bestandteile gelten allgemein als Risikomaterial auf Grund des unangenehmen Geruchs und Geschmacks und der hohen Gesamtkeimzahl bei gleichzeitig hohem Mykotoxinpotential. Für die Herstellung hygienisch einwandfreier Lebens- und Futtermittel sind diese ungeeignet. Insbesondere für den Verbraucherschutz sind die Ermittlung von pilzgeschädigten Körnerfrüchte von sehr großer Bedeutung.
Unter der Mikroflora von Getreide treten sowohl toxinogene als auch genuss- und verarbeitungswertschädigende Spezies nebeneinander auf. Die Symptome können makroskopisch zum Teil nicht von denen der toxinbildenden Arten unterschieden werden. Eine zusätzliche Identifizierung der Pilzarten über die jeweils charakteristische Sporenform stellt einen besonderen Vorteil dar.
Darüber hinaus können auch durch sich ändernde Umweltbedingungen hervorgerufene Änderungen der Schädigungen als unbekannte Objekte automatisch erkannt und zugeordnet werden (Novelty Detection).
Weitere Gegenstände sind beispielsweise Zellen oder Zellschnitte. Damit können insbesondere Krankheiten und deren Verläufe über bestimmte Zellentwicklungen beurteilt werden. Über das Bestimmen des Zustandes von Zellen können direkt oder über Zellschnitte, zum Beispiel in Form von Hep-2-Zellschnitten, Krankheiten und deren Verläufe bestimmt und in ihrem Verlauf verfolgt werden.
Weiterhin können das Vorhandensein, die Anzahl und eine eventuelle Entwicklung von Mikroorganismen, Pilzsporen oder Pollen als biotische Partikel jeweils Gegenstände vorteilhaft nachgewiesen und bestimmt werden.
Weitere Anwendungen sind in der Meteorologie und der Klimaforschung gegeben. Insbesondere bei der Wetterprognose hinsichtlich von sich ändernden Klimata oder Unwettergefahren ergeben sich vorteilhafte Anwendungen. Dabei können insbesondere aus Aufzeichnungen und aktuellen Messdaten beispielsweise der Temperatur, Windgeschwindigkeit und Luftfeuchtigkeit als Attributwertpaare Prognosen erstellt werden. Zur Klimaforschung werden insbesondere Bohrkerne herangezogen. Bei Bohrkemen kann leicht die Schichtfolge der Gegenstand oder Bestandteile des Bohrkems, beispielsweise Pollen, Gegenstände sein. Aus dem Vorhandensein und der Arten der Pollen können leicht Rückschlüsse auf geherrschte Klimata gezogen werden. Daraus können auch Prognosen über zu erwartende Klimaänderungen gewonnen werden.

Die Daten der Abbildungen von Gegenständen können beispielsweise auch über wenigstens einen den mindestens einen Gegenstand abbildenden Detektor gewonnen werden. Dieser ist mit dem Datenverarbeitungssystem so verbunden, dass das Abbild des Gegenstandes als Objekt im Datenverarbeitungssystem farbecht, farbkodiert oder in Grauwerte gewandelt zum Entscheidungsmodul gelangt. Der abbildende Detektor kann dazu vorteilhafterweise ein Bestandteil eines optischen Spektrometers oder einer Bildaufnahmeeinrichtung sein.

Weitere Objekte können auch Objekte in Datenbanken sein. Das sind unter anderem Telekommunikationsdaten, Präsentationsdaten, Bilder, Abbildungen oder Zeichen der unterschiedlichsten Art.

Die genannten Objekte können einzeln oder in wenigstens einer Kombination Objekte des Verfahrens zur automatischen Erkennung und Verarbeitungfolgerung von als digitale Daten vorliegenden Objekten, insbesondere auch von unbekannten Objekten, sein.

Die Verfahren können den Nutzern vorteilhafterweise als Computer-Programm-Produkte mit jeweils einem Programmcode zur Durchführung der Verfahren zur automatischen Erkennungund Verarbeitung von als digitale Daten vorliegenden Objekten und als Computer-Programm-Produkte auf maschinenlesbaren Trägem zur Durchführung der Verfahren zur automatischen Erkennung und Verarbeitung von als digitale Daten vorliegenden Objekten, zur Verfügung gestellt werden.

Vorteilhafte Ausgestaltungen der Erfindung sind in den Patentansprüchen 2 bis 6 angegeben.

Im Datenverarbeitungssystem ist nach der Weiterbildung des Patentanspruchs 2 die Falldatenbank hierarchisch in den Fallklassen geordnet ist, wobei ähnliche Objekte und deren Häufigkeit in den Fallklassen die Grundlage für das Lernen neuer statistischer Modellklassen sind und/oder ein Strategiemodell sichert, dass bei Vorhandensein genügender Objekte in einer Fallklasse diese Daten zum Lernen neuer statistischer Modelle an ein statistisches Lernmodul gegeben werden, so dass neue Strategien für das Lernen neuer statistischer Modellklassen bestimmt sind.

Modelle werden nach der Weiterbildung des Patentanspruchs 3 vorteilhafterweise auf Grund bekannter Objekte geternt.

Modelle werden nach der Weiterbildung des Patentanspruchs 4 vorteilhafterweise auf Grund bekannter Objekte gelernt, wobei eine Merkmalsselektion der Objekte als Voraussetzung für das Bayes'sche Entscheidungskriterium durchgeführt wird.

Das Modul einer ähnlichkeitsbasierten Schlussfolgerung beruht nach der Weiterbildung des Patentanspruchs 5 auf der fuzzy-Ähnlichkeit, um die Unsicherheit der Daten zu modellieren.

Über ein Bestimmungsmodul vor dem Modul einer ähnlichkeitsbasierten Schlussfolgerung werden nach der Weiterbildung des Patentanspruchs 6 Ausreisser darstellende Objekte erkannt und diese einer Fallklasse oder einer neuen Fallklasse zugeordnet. Weiterhin sind die Anzahl und die Ähnlichkeit von Ausreissern die Grundlage für eine neue Modellklasse.

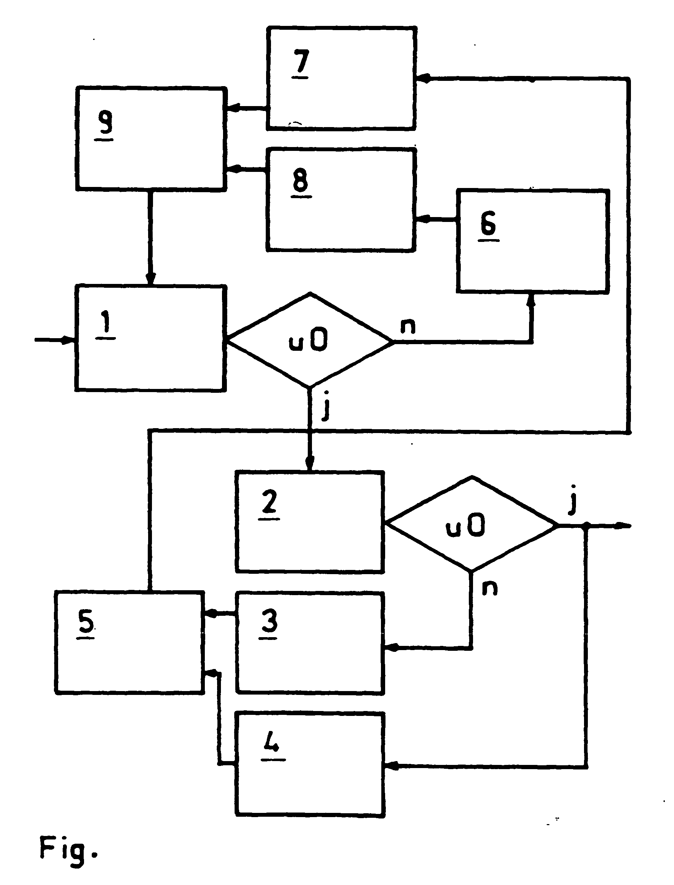

Ein Ausführungsbeispiel der Erfindung ist in der Zeichnung prinzipiell dargestellt und wird im folgenden näher beschrieben.
Es zeigt die
- Fig.: ein Datenverarbeitungssystem zur Durchführung eines Verfahrens zur automatischen Erkennung und Verarbeitung von als digitale Daten vorliegenden Objekten.

Im nachfolgendem ersten Ausführungsbeispiel werden ein Verfahren und ein Datenverarbeitungssystem zur automatischen Erkennung und Verarbeitung von als digitale Daten vorliegenden Objekten zusammen näher erläutert.

Ein Datenverarbeitungssystem zur Durchführung des Verfahrens zur automatischen Erkennung und Verarbeitung von als digitale Daten vorliegenden Objekten besteht im Wesentlichen aus einer Datenverarbeitungseinrichtung mit einem Entscheidungsmodul 1, einem Modul 2 zur ähnlichkeitsbasierten Schlussfolgerung, einem Aktualisierungsmodul 3 für Fallklassen, einem Kontrollmodul 4 für Fallklassen, einem MML-Aktualisierungsmodul 8 oder einem MDL-Aktualisierungsmodul, einem MML-Lemmodul 7 oder einem MDL-Lernmodul, einer Modelldatenbank 9, einem Zwischenspeicher 6 und einer Falldatenbank 5. Diese Elemente sind alle Bestandteile des Datenverarbeitungssystems.

Die Fig. zeigt ein Datenverarbeitungssystem zur Durchführung eines Verfahrens zur automatischen Erkennung und Verarbeitung von als digitale Daten vorliegenden Objekten in einer prinzipiellen Darstellung.

In der Fig. sind die Entscheidungen ja mit j und nein mit n bezeichnet.

Über das Entscheidungsmodul 1 wird aus 1 bis n Modellen einer Modelldatenbank 9 nach dem Bayes'schen Entscheidungskriterium für ein neues Objekt entschieden, ob das neue Objekt einer bekannten Modellklasse zuzuordnen ist. Modelle können auf Grund bekannter Objekte gelernt werden, wobei eine Merkmalsselektion der Objekte als Voraussetzung für das Bayes'sche Entscheidungskriterium durchgeführt werden kann. Dem Bayes'sche Entscheidungskriterium liegt die Dirichlet- oder die Normalverteitung zu Grunde.
Bei keinem unbekannten Objekt (uO) wird das Objekt als neues Objekt einer Modellklasse zugeordnet in einem mit dem Entscheidungsmodul 1 zusammengeschalteten Zwischenspeicher 6 abgelegt.
Bei einem unbekannten Objekt (uO) wird über ein Modul 2 einer ähnlichkeitsbasierten Schlussfolgerung, das mit dem Entscheidungsmodul 1 verbunden ist, das neue unbekannte Objekt (uO) mit in einer Falldatenbank 5 gespeicherten Objekten verglichen.
Bei einem positiven Vergleich wird das unbekannte Objekt (uO) einer Fallklasse mit ähnlichen oder gleichen Objekten zugeordnet. Das erfolgt über ein Aktualisierungsmodul 3 zwischen dem Modul 2 einer ähnlichkeitsbasierten Schlussfolgerung und der Falldatenbank 5. Dieses Modul 2 basiert auf der fuzzy-Ähnlichkeit, um die Unsicherheit der Daten zu modellieren.
Bei einem negativen Vergleich wird das unbekannte Objekt (uO) über ein Kontrollmodul 4, das zwischen dem Modul 2 einer ähnlichkeitsbasierten Schlussfolgerung und der Falldatenbank 5 geschalten ist, als nicht einer Modellklasse zugehörig angezeigt und entweder einer Fallklasse oder einer neuen Fallklasse zugeordnet.
Die Falldatenbank 5 selbst ist hierarchisch in den Klassen geordnet, wobei ähnliche Objekte und deren Häufigkeit in den Fallklassen geordnet, wobei ähnliche Objekte und deren Häufigkeit in den Fallklassen die Grundlage für das Lernen neuer statistischer Modellklassen sind, so dass neue Strategien für das Lernen neuer statistischer Modellklassen bestimmt sind.
Die hierarchisch geordnete Datenbank sichert, dass Daten in Über- und/oder Untergruppen hierarchisch gesammelt werden. So lange nicht genügend Fälle für die Untergruppen vorhanden sind, können die Daten ausgelesen werden und für das Lernen eines groben statistischen Modells genutzt werden. In dem Moment, wo genügend Daten für die Untergruppen vorhanden sind, kann ein spezielles statistisches Modell für die Daten gelernt werden. Das grobe statistische Modell wird im Falle einer flachen Repräsentation der Modelle eliminiert oder es repräsentiert den Überknoten im hierarchisch statistischen Modell.
Weiterhin werden die Objekte einer Fallklasse der Falldatenbank 5 über ein MML-Lemmodul 7 (MML- Minimum Message Length - minimale Informationslänge) oder einem MDL-Lernmodul (MDL-Minimum Description Length - minimale Beschreibungslänge), welches zwischen der Falldatenbank 5 und der Modelldatenbank 9 geschalten ist, für Modelle so bearbeitet, dass die Objekte der Fallklasse entweder einer Modellklasse in der Modelldatenbank 9 zugeordnet oder als neue Modellklasse einschließlich eines neuen Modells in der Modelldatenbank 9 gespeichert werden. Der Eintrag der Klasse in der Falldatenbank 5 wird gelöscht. Gleichzeitig werden die Daten für das neue Modell auch in einem Zwischenspeicher 6 als Modellklasse gespeichert.
Weiterhin werden die Objekte einer Modellklasse im Zwischenspeicher 6 über eine MML-Aktualisierungsmodul 8 oder ein MDL-Aktualisierungsmodul so bearbeitet, dass das jeweilige Modell aktualisiert wird. Dazu ist das MML-Aktualisierungsmodul 8 oder das MDL-Aktualisierungsmodul zwischen dem Zwischenspeicher 6 und der Modelldatenbank 9 geschalten. Bei einer bestimmten Anzahl von Objekten einer Modellklasse eines Zwischenspeichers 6 werden über das MML-Aktualisierungsmodul 8 oder das MDL-Aktualisierungsmodul die Parameter der Verteilungsdichtefunktion neu gelernt und damit das Modell der Modellklasse aktualisiert.

In einer Ausführungsform kann ein Bestimmungsmodul zwischen dem Entscheidungsmodul 1 und dem Modul 2 einer ähnlichkeitsbasierten Schlussfolgerung für unbekannte Objekte geschalten sein. Damit können Ausreisser darstellende Objekte erkannt und diese einer Fallklasse oder einer neuem Fallklasse zugeordnet werden. Die Anzahl und die Ähnlichkeit von Ausreissem sind die Grundlage für eine neue Modellklasse.

Ein zweites Ausführungsbeispiel stellt ein Computer-Programm-Produkt mit einem Programmcode zur Durchführung eines im ersten Ausführungsbeispiel beschriebenen Verfahrens zur automatischen Erkennung und Verarbeitung von als digitale Daten vorliegenden Objekten dar, wenn das Programm auf einem Rechner abläuft.

Ein drittes Ausführungsbeispiel ist ein Computer-Programm-Produkt auf einem maschinenlesbaren Träger zur Durchführung eines im ersten Ausführungsbeispiel beschriebenen Verfahrens zur automatischen Erkennung und Verarbeitung von als digitale Daten vorliegenden Objekten, wenn das Programm auf einem Rechner abläuft.

## Patentansprüche

1. Verfahren zur automatischen Erkennung und Verarbeitung von als digitale Daten vorliegenden und durch Merkmalswertpaare repräsentierten Objekten in Form von Abbildungen von Gegenständen, wobei Merkmalen der Gegenstände Werte zugeordnet sind, mit den Schritten
a) Entscheidung aus 1 bis n Modellen einer Modelldatenbank (9) nach dem Bayes'schen Entscheidungskriterium auf Basis der Dirichlet- oder der Normalverteilung mit dem Entscheidungsmodul (1) des Datenverarbeitungssystems, ob ein bekanntes oder ein unbekanntes Objekt vorliegt und das Objekt damit einer bekannten Modellklasse zuzuordnen ist, wobei bei einem bekannten Objekt dieses als neues Objekt einer Modellklasse zugeordnet in einem Zwischenspeicher (6) abgelegt und bei einem unbekannten Objekt über ein Modul (2) einer ähnlichkeitsbasierten Schlussfolgerung das unbekannte Objekt mit in einer Falldatenbank (5) gespeicherten Objekten verglichen wird, so
- dass bei einem positiven Vergleich das unbekannte Objekt einer Fallklasse mit ähnlichen oder gleichen Objekten zugeordnet wird und
- dass bei einem negativen Vergleich das unbekannte Objekt als nicht einer Modellklasse zugehörig angezeigt und entweder einer Fallklasse oder einer neuen Fallklasse zugeordnet wird,
b) Bearbeitung der als Merkrnalswertpaare vorliegenden Objekte einer Fallklasse der Falldatenbank (5) in einem mit der Falldatenbank (5) verbundenen MDL-Lernmodul (MDL-Minimum Description Length - minimale Beschreibungslänge) mit einer bekannten Datenkompression der die Modelle repräsentierenden Daten für eine minimale Datenlänge als Bearbeitung der als Merkrnalswertpaare vorliegenden Objekte einer Fallklasse der damit verbundenen Falldatenbank (5), wobei
- die Objekte der Fallklasse entweder einer Modellklasse in der Modelldatenbank (9) zugeordnet oder als neue Modellklasse einschließlich eines neuen Modells in der Modelldatenbank (9) gespeichert werden,
- der Eintrag der Klasse in der Falldatenbank (5) gelöscht wird und
- die Daten für das neue Modell auch in einem Zwischenspeicher (6) als Modellklasse gespeichert werden, wobei
bei einer bestimmten Anzahl von Objekten einer Modellklasse des Zwischenspeichers (6) über ein MDL-Aktualisierungsmodul die Parameter einer Verteilungsdichtefunktion neu gelernt werden und damit das Modell der Modellklasse aktualisiert wird.

2. Verfahren nach Patentanspruch 1, **dadurch gekennzeichnet, dass** im Datenverarbeitungssystem die Falldatenbank (5) hierarchisch in den Fallklassen geordnet ist, wobei ähnliche Objekte und deren Häufigkeit in den Fallklassen die Grundlage für das Lernen neuer statistischer Modellklassen sind und/oder ein Strategiemodell sichert, dass bei Vorhandensein genügender Objekte in einer Fallklasse diese Daten zum Lernen neuer statistischer Modelle an ein statistisches Lernmodul gegeben werden, so dass neue Strategien für das Lernen neuer statistischer Modellklassen bestimmt sind.

3. Verfahren nach Patentanspruch 1, **dadurch gekennzeichnet, dass** Modelle auf Grund bekannter Objekte gelernt werden.

4. Verfahren nach Patentanspruch 1, **dadurch gekennzeichnet, dass** Modelle auf Grund bekannter Objekte gelernt werden, wobei eine Merkmalsselektion der Objekte als Voraussetzung für das Bayes'sche Entscheidungskriterium durchgeführt wird.

5. Verfahren nach Patentanspruch 1, **dadurch gekennzeichnet, dass** das Modul (2) einer ähnlichkeitsbasierten Schlussfolgerung vorzugsweise auf der fuzzy-Ähnfichkeit, um die Unsicherheit der Daten zu modellieren, beruht.

6. Verfahren nach Patentanspruch 1, **dadurch gekennzeichnet, dass** über ein Bestimmungsmodul vor dem Modul (2) einer ähnlichkeitsbasierten Schlussfolgerung Ausreisser darstellende Objekte erkannt und diese einer Fallklasse oder einer neuen Fallklasse zugeordnet werden und dass die Anzahl und die Ähnlichkeit von Ausreissern die Grundlage für eine neue Modellklasse sind.

7. Datenverarbeitungssystem zur automatischen Erkennung und Verarbeitung von als digitale Daten vorliegenden und durch Merkmalswertpaare repräsentierten Objekten in Form von Abbildungen von Gegenständen, wobei Merkmalen der Gegenstände Werte zugeordnet sind, mit
a) einer Modelldatenbank (9) mit 1 bis n Modellen,
b) einem mit der Modelldatenbank verbundenen und nach dem Bayes'schen Entscheidungskriterium auf Basis der Dirichlet- oder der Normalverteilung entscheidenden Entscheidungsmodul (1), ob ein bekanntes oder ein unbekanntes Objekt vorliegt und das Objekt damit einer bekannten Modellklasse zuzuordnen ist,
c) jeweils einem mit dem Entscheidungsmodul (1) verbundenen Zwischenspeicher (6) für eine Modellklasse, so dass ein bekanntes Objekt der Modellklasse zugeordnet im entsprechenden Zwischenspeicher (6) abgelegt wird,
d) einem mit dem Entscheidungsmodul (1) verbundenen Modul (2) einer ähnlichkeitsbasierten Schlussfolgerung für ein unbekanntes Objekt und
e) einer damit zusammengeschalteten Falldatenbank (5) mit gespeicherten Objekten, so dass das unbekannte Objekt mit in der Falldatenbank (5) gespeicherten Objekten verglichen wird, wobei
bei einem positiven Vergleich das unbekannte Objekt einer Fallklasse mit ähnlichen oder gleichen Objekten oder bei einem negativen Vergleich das unbekannte Objekt als nicht einer Modellklasse zugehörig angezeigt und entweder einer Fallklasse oder einer neuen Fallklasse zugeordnet wird,
und
f) einem MDL-Lernmodul (MDL-Minimum Description Length - minimale Beschreibungslänge) jeweils für eine bekannte Datenkompression der die Modelle repräsentierenden Daten für eine minimale Datenlänge als Bearbeitung der als Merkmalswertpaare vorliegenden Objekte einer Fallklasse der damit verbundenen Falldatenbank (5), das weiterhin mit der Modelldatenbank (9) so zusammengeschaltet ist,
- dass die Objekte der Fallklasse entweder einer Modellklasse in der Modelldatenbank (9) zugeordnet oder als neue Modellklasse einschließlich eines neuen Modells in der Modelldatenbank (9) gespeichert werden,
- dass der Eintrag der neuen Fallklasse in der Falldatenbank (5) gelöscht wird und
- dass die Daten für das neue Modell auch in einem Zwischenspeicher (6) als Modellklasse gespeichert werden, wobei
bei einer bestimmten Anzahl von Objekten einer Modellklasse des Zwischenspeichers (6) über ein MDL-Aktualisierungsmodul die Parameter einer Verteilungsdichtefunktion neu gelernt werden und damit das Modell der Modellklasse aktualisiert wird.

8. Computer-Programm-Produkt mit einem Programmcode zur Durchführung des Verfahrens zur automatischen Erkennung und Verarbeitung von als digitale Daten vorliegenden Objekten, insbesondere auch von unbekannten Objekten, nach einem der Ansprüche 1 bis 5, wenn das Programm auf einem Rechner abläuft.

9. Cbmputer-Programm-Produkt auf einem maschinenlesbaren Träger zur Durchführung des Verfahrens zur automatischen Erkennung und Verarbeitung von als digitale Daten vorliegenden Objekten, insbesondere auch von unbekannten Objekten, nach einem der Ansprüche 1 bis 5, wenn das Programm auf einem Rechner abläuft.

## Claims

1. Method for automatic identification and processing of objects in the form of images of objects that are present as digital data and represented by feature value pairs, wherein features of the objects have values assigned,
comprising the steps of
a) deciding, based on 1 to n models of a model database (9), according to Bayes decision criterion based on the Dirichlet distribution or standard distribution with the decision module (1) of the data processing system, whether a known or an unknown object is present and the object can thus be assigned to a known model class, wherein, in case of a known object, the latter is saved, assigned as a new object to a model class, in a cache (6), and, in case of an unknown object, by means of a module (2) of a similarity-based evaluation the unknown object is compared to objects saved in a case database (5), so
- that in case of a positive comparison result the unknown object is assigned to a case class with similar or same objects, and
- that in case of a negative comparison result the unknown object is indicated as not belonging to a model class and is assigned either to a case class or a new case class,
b) processing the objects of a case class of the case database (5) that are present as feature value pairs in an MDL learning module (MDL minimum description length), connected to the case database (5), with a known data compression of the data representing the models for a minimal data length as processing of the objects, present as feature value pairs, of a case class of the case database (5) connected therewith, wherein
- the objects of the case class are assigned either to a model class in the model database (9) or are saved in the model database (9) as a new model class including a new model,
- the entry of the class in the case database (5) is deleted, and
- the data for the new model are saved also in a cache (6) as a model class, wherein
for a certain number of objects of a model class of the cache (6) by means of an MDL updating module the parameters of a distribution density function are learned anew and the model of the model class is thereby updated accordingly.

2. Method according to claim 1, **characterized in that** in the data processing system the case database (5) is ordered hierarchically in the case classes, wherein similar objects and their frequency in the case classes are the basis for learning new statistical model classes and/or a strategy model ensures that, in case of the presence of sufficient objects in a case class, these data are transferred for learning new statistical models to a statistic learning module so that new strategies for learning new statistical model classes are determined.

3. Method according to claim 1, **characterized in that** models are learned based on known objects.

4. Method according to claim 1, **characterized in that** models are learned based on known objects, wherein a feature selection of the objects is performed as a prerequisite for the Bayes decision criterion.

5. Method according to claim 1, **characterized in that** the module (2) of a similarity-based evaluation is based preferably on fuzzy similarity in order to model the uncertainty of the data.

6. Method according to claim 1, **characterized in that**, by means of a determination module upstream of the module (2) of a similarity-based evaluation, objects representing outliers are recognized and are assigned to a case class or to a new case class and **in that** the number and the similarity of outliers are the basis for a new model class.

7. Data processing system for automatic identification and processing of objects in the form of images of objects that are present as digital data and represented by feature value pairs, wherein features of the objects have values assigned, comprising
a) a model database (9) with 1 to n models,
b) a decision module (1) that is connected to the model database and that decides according to Bayes decision criterion based on the Dirichlet distribution or standard distribution whether a known or an unknown object is present and the object can thus be assigned to a known model class,
c) a cache (6), each connected to the decision module (1), for a model class such that a known object is saved, assigned to the model class, in the corresponding cache (6),
d) a module (2) of a similarity-based evaluation for an unknown object connected to the decision module (1), and
e) a case database (5) with saved objects connected therewith so that the unknown object is compared to the objects saved in the case database (5), wherein,
in case of a positive comparison result, the unknown object is indicated as belonging to a case class with similar or same objects or, in case of a negative comparison result, the unknown object is indicated as not belonging to a model class and is assigned either to a case class or a new case class,
and
f) an MDL learning module (MDL - minimum description length) each for a known data compression of the data representing the models for a minimal data length as processing of the objects, present as feature value pairs, of a case class of the case database (5) connected therewith, that is furthermore connected to the model database (9) in such a way
- that the objects of the case class are assigned either to a model class in the model database (9) or are saved in the model database (9) as a new model class including a new model,
- that the entry of the new case class in the case database (5) is deleted, and
- the data for the new model are saved also in a cache (6) as a model class, wherein
for a certain number of objects of a model class of the cache (6) by means of an MDL updating module the parameters of a distribution density function are learned anew and the model of the model class is thereby updated accordingly.

8. Computer program product with a program code for performing the method for automatic identification and processing of objects in the form of digital data, especially also of unknown objects, according to one of claims 1 to 5, when the program is running on a computer.

9. Computer program product on a machine-readable carrier for performing the method for automatic identification and processing of objects in the form of digital data, especially also of unknown objects, according to one of claims 1 to 5, when the program is running on a computer.

## Revendications

1. Procédé pour l'identification et le traitement automatiques d'objets consistant en données numériques qui, elles, sont représentées par des paires de valeurs caractéristiques en tant qu'images d'objets, où des valeurs sont attribuées aux caractéristiques des objets et où des symboles servant à décrire ces caractéristiques sont affichés, soit séparément, soit en combinaison avec les pas ou les séquences suivants:
a) conclusion obtenue par l'application, sur la base de la distribution normale ou selon le théorème de Dirichlet, du critère de détermination de Bayes à un nombre de 1 à n d'une base de données modèles (9), et par l'intermédiaire du module de détermination (1) du système informatique, sur le fait de ce qu'il y existe un objet connu ou inconnu et si cet objet doit donc être attribué à une catégorie de modèles connue, où bien lorsqu'il s'y agit d'un objet connu, celui-ci est sauvegardé dans une mémoire tampon (6), tandis qu'au cas où l'objet en question serait inconnu, ce dernier est comparé, à l'aide d'un module (2) permettant de parvenir a des conclusions semblables, à des objets sauvegardés dans une base de données études de cas (5), de telle sorte que
- lorsque cette comparaison aboutit à un résultat positif, l'objet inconnu est assigné à une catégorie de cas dont les objets sont semblables ou les mêmes, tandis que
- lorsque le résultat de la comparaison est négatif, l'objet inconnu n'est pas assigné à une catégorie modèles, mais à une catégorie de cas déjà existante ou à une nouvelle catégorie de cas,
b) traitement des objets représentés en tant que paires de valeurs caractéristiques d'une catégorie de cas dans une base de données études de cas (5), ceci à l'aide d'un module de lecture MDL (Minimum Description Length) qui, lui, est raccordé à la base de données études de cas (5), ainsi qu'à l'aide d'une compression connue de données qui, elle, assure le traitement des objets représentés en tant que paires de valeurs caractéristiques d'une catégorie de cas de la base de données études de cas (5) liée à ces objets, de telle sorte
- que les objets de la catégorie de cas sont assignés à une catégorie modèles d'une base de données modèles (9) ou sauvegardés dans une base de données modèles (9) en tant que nouveau modèle appartenant à une nouvelle catégorie modèles,
- que l'entrée de cette catégorie dans la base de données études de cas (5) est effacée, et
- que les données du nouveau modèle sont sauvegardées en tant que catégorie modèles dans une mémoire tampon (6), où
dès que les objets d'une même catégorie modèles sauvegardés dans la mémoire tampon (6) ont atteint un nombre déterminé, les paramètres d'une fonction de densité de distribution sont identifiés de nouveau à l'aide d'un module MDL de mise à jour, ceci pour mettre à jour le modèle de la catégorie modèles.

2. Procédé suivant la revendication 1, **caractérisé en ce que** dans le système informatique, la base de données études de cas (5) présente une structure hiérarchique classant les différentes catégories de cas , où les objets semblables et leur fréquence de parution dans les catégories modèles servent de base à l'identification de nouvelles catégories modèles statistiques et/ou assurent un modèle stratégique, ce qui fait que, dès qu'il y a suffisamment d'objets dans une même catégorie de cas, ces données soient transmises à un module de lecture statistique afin de permettre la détermination de nouvelles stratégies pour l'identification de nouveaux modèles statistiques.

3. Procédé suivant la revendication 1, **caractérisé en ce que** des modèles sont identifiés sur la base d'objets connus.

4. Procédé suivant la revendication 1, **caractérisé en ce que** des modèles sont identifiés sur la base d'objets connus, ces objets étant à la fois soumis à une sélection de caractéristiques qui, elle, est la condition préalable pour permettre l'application du critère de détermination selon le théorème de Bayes.

5. Procédé suivant la revendication 1, **caractérisé en ce que** le module (2) d'une conclusion semblable est basé, de préférence, sur la similitude "fuzzy", ceci pour réaliser la modélisation de l'incertitude des données.

6. Procédé suivant la revendication 1, **caractérisé en ce que** les objets représentant des valeurs extrêmes sont identifiés par un module de détermination placé en amont du module (2) d'une conclusion semblable, que ces objets sont ensuite assignés à une catégorie de cas ou à une nouvelle catégorie de cas, et que le nombre et la similitude de ces valeurs extrêmes constituent la base d'une nouvelle catégorie modèles.

7. Système informatique pour l'identification et le traitement automatiques d'objets consistant en données numériques qui, elles, sont représentées par des paires de valeurs caractéristiques en tant qu'images d'objets, où des valeurs sont assignés aux caractéristiques des objets et où des symboles servant à décrire ces caractéristiques sont affichés, soit séparément, soit en combinaison avec les pas ou les séquences suivants:
a) une base de données modèles (9) dont le nombre de modèles va de 1 à n,
b) un module de détermination (1) raccordé à la base de données modèles qui, lui, fonctionne selon le critère de détermination de Bayes et sur la base de la distribution normale ou selon le théorème de Dirichlet, et qui parvient à déterminer s'il y existe un objet connu ou inconnu et si cet objet doit donc être assigné à une catégorie de modèles connue,
c) une mémoire tampon (6) reliée au module de détermination (1) pour chaque catégorie modèles, ceci qui assure que tous les objets connus sont assignés à leur catégorie modèles puis sauvegardés dans la mémoire tampon (6) respective,
d) un module (2) d'une conclusion semblable raccordé au module de détermination (1) qui, lui, permet d'identifier les objets inconnus, et
e) une base de données études de cas (5) connectée aux deux modules, ce qui permet de comparer les objets inconnus à ceux qui sont sauvegardés dans la base de données études de cas (5), de telle sorte que
lorsque cette comparaison aboutit à un résultat positif, l'objet inconnu est assigné à une catégorie de cas dont les objets sont semblables ou les mêmes, tandis que lorsque le résultat de la comparaison est négatif, l'objet inconnu n'est pas assigné à une catégorie modèles, mais à une catégorie de cas déjà existante ou à une nouvelle catégorie de cas, et
f) un module de lecture MDL (Minimum Description Length) qui, lors du traitement des objets affichés en tant que paires de valeurs caractéristiques d'une même catégorie de cas dans la base de donnés études de cas (5), soumet les données représentant les modèles d'une longueur de données minimale à une compression connue de données, ce module étant toujours connecté à la base de données modèles (9), de telle sorte
- que les objets de la catégorie de cas sont assignés à une catégorie modèles de la base de données modèles ou sauvegardés dans la base de données modèles (9) en tant que nouveau modèle d'une nouvelle catégorie modèles,
- que l'entrée de cette catégorie dans la base de données études de cas (5) est effacée, et
- que les données du nouveau modèle sont sauvegardées en tant que catégorie modèles dans une mémoire tampon (6), où
dès que les objets d'une même catégorie modèles sauvegardés dans la mémoire tampon (6) ont atteint un nombre déterminé, les paramètres d'une fonction de densité de distribution sont identifiés de nouveau à l'aide d'un module MDL de mise à jour, ceci pour mettre à jour le modèle de la catégorie modèles.

8. Produit informatique avec code programme permettant l'exécution du procédé pour l'identification et le traitement automatiques d'objets consistant en données numériques, même des objets inconnus, suivant une des revendications 1 à 5, lorsque le programme est exécuté sur un ordinateur.

9. Produit informatique fourni sur support lisible par machine permettant l'exécution du procédé pour l'identification et le traitement automatiques d'objets consistant en données numériques, même des objets inconnus, suivant une des revendications 1 à 5, lorsque le programme est exécuté sur un ordinateur.
